# EUROPÄISCHE PATENTANMELDUNG

(11) **EP 2 570 370 A1**
(43) Veröffentlichungstag der Anmeldung: **20.03.2013**
(21) Anmeldenummer: 12184494.8
(22) Anmeldetag: 14.09.2012
(51) Int. Cl.: B65G 1/137

(54) **System zum Lagern und Abgeben von Transporteinheiten**

(30) Priorität: 15.09.2011 DE 102011053633
(71) Anmelder: Klug GmbH Integrierte Systeme, 92552 Teunz (DE)
(72) Erfinder: Klug, Johann, 92552 Teunz (DE); Roidl, Johann, 92637 Weiden (DE)
(74) Vertreter: Baudler, Ron

(57) **Zusammenfassung**

Vorgeschlagen wird ein System zum Lagern und zum Abgeben von Transporteinheiten (T) in einer vorgesehenen Reihenfolge, bei dem Transporteinheiten (T) in mehreren Regalebenen (17) wenigstens eines Regals (2) lagerbar sind, bei dem die in dem Regal (2) gelagerten Transporteinheiten (T) einem Aufzug (9) zuführbar sind, und bei dem die dem Aufzug (9) zugeführten Transporteinheiten (T) an wenigstens einen Abgabebereich (11) übergebbar sind, wobei der Aufzug (9) als Umlaufaufzug (9) mit mehreren Fahrkörben (10) für Transporteinheiten (T) ausgebildet ist. Weiterhin wird ein Verfahren zum Lagern und Abgeben von Transporteinheiten (T) in einer vorgesehenen Reihenfolge vorgeschlagen.

## Beschreibung

Die vorliegende Erfindung betrifft ein System zum Lagern und Abgeben von Transporteinheiten in einer vorgesehenen Reihenfolge, bei dem Transporteinheiten in mehreren Regalebenen wenigstens eines Regals lagerbar sind, bei dem die in dem Regal gelagerten Transporteinheiten einem Aufzug zuführbar sind, und bei dem die dem Aufzug zugeführten Transporteinheiten an wenigstens einen Abgabebereich übergebbar sind.

Im Berech der Warenwirtschaft, insbesondere im Bereich des Warenausgangs, ist es vielfach erforderlich, transportfertig hergerichtete Transporteinheiten zu lagern und in einer vorgesehenen Reihenfolge bereitzustellen. Hierzu sind aus der Praxis automatische Systeme sowie entsprechende Verfahren zu deren Betrieb bekannt, welche sowohl Lagerplätze als auch Handhabungsmittel für die Transporteinheiten umfassen.

Aufgabe der vorliegenden Erfindung ist es, ein System der eingangs genannten Art zu verbessern.

Die Aufgabe wird bei einem System der eingangs genannten Art dadurch gelöst, dass der Aufzug als Umlaufaufzug mit mehreren Fahrkörben für Transporteinheiten ausgebildet ist.

Unter Transporteinheiten werden im Rahmen dieses Dokumentes Transportstücke aller Art, insbesondere Waren, Behälter, Pakete, Paletten oder Tabletts, verstanden.

Weiterhin bezieht sich der Begriff Regal auf eine Einrichtung zum Lagern von Transporteinheiten, bei der die Transporteinheiten in mehreren übereinanderliegenden Regalebenen jeweils in wenigstens einer Linie lagerbar sind. Bei dem erfindungsgemäßen System sind die in den Regalebenen gelagerten Transporteinheiten einem Aufzug zuführbar, wobei hierzu insbesondere automatische Regalbediengeräte vorgesehen sein können. Der insbesondere automatisch gesteuerte Aufzug ist so ausgebildet, dass er in mehreren Regalebenen Transporteinheiten aufnehmen und zu einem Abgabebereich transportieren kann. Unter einem Abgabebereich wird dabei ein solcher Bereich des Systems verstanden, an den die Transporteinheiten vom Umlaufaufzug zum Zwecke ihres Weitertransports übergeben werden. Es handelt sich also um einen Bereich, in den die Transporteinheiten unmittelbar gelangen, wenn sie aus dem Umlaufaufzug ausgeladen werden. Dabei können auch mehrere Abgabebereiche, beispielsweise in unterschiedlichen Ebenen oder auf unterschiedlichen Seiten des Aufzugs, vorgesehen sein. Mittels des Aufzugs ist es damit möglich, die in unterschiedlichen Regalebenen gelagerten Transporteinheiten zu einem gemeinsamen Abgabebereich bzw. zu mehreren gemeinsamen Abgabebereichen zu übergeben. Dabei können automatische Mittel zum Handhaben der Transporteinheiten vorgesehen sein, um die Transporteinheiten vom Umlaufaufzug an den Abgabebereich zu übergeben, im Abgabebereich weiterzutransportieren und an nachgeschaltete Transportmittel weiterzugeben.

Erfindungsgemäß ist vorgesehen, dass der Aufzug als Umlaufaufzug mit mehreren Fahrkörben für Transporteinheiten ausgebildet ist. Bei einem Umlaufaufzug, auch Paternosteraufzug genannt, verkehren mehrere an wenigstens einem endlosen Umlaufelement hängend befestigte Fahrkörbe in einer umlaufenden Bewegung. Bei den endlosen Umlaufelementen kann es sich insbesondere um Ketten, Bänder und/oder Seile handeln. Die Umlaufelemente werden üblicherweise über korrespondierende obere und untere Umlenkelemente geführt, umgelenkt und angetrieben. Die Umlenkelemente können insbesondere Kettenräder, Scheiben und/oder Rollen umfassen. Fahrkörbe sind dabei allgemein Aufnahmeelemente für die zum Transportieren vorgesehenen Transportbehälter. Diese können insbesondere als Plattformen, korbartig oder kabinenartig ausgebildet sein, wobei sie üblicherweise an wenigstens einer Seite zum Zuführen (Einladen) der Transporteinheiten und/oder zum Übergeben (Ausladen) der Transporteinheiten offen sind. Im Bereich der Umlenkelemente werden die Fahrkörbe in der Regel längs einer oder mehrerer Kurven so geführt, dass eine Aufwärtsbewegung in eine Abwärtsbewegung bzw. dass eine Abwärtsbewegung in eine Aufwärtsbewegung übergeht. Auf Grund der hängenden Befestigung der Fahrkörbe verändert sich die Ausrichtung der Fahrkörbe im Raum auch dann nicht, wenn sie den Bereich der Umlenkelemente passieren. So ist es möglich, auch mit Transporteinheiten beladene Fahrkörbe über den Bereich der Umlenkelemente hinweg umlaufen zu lassen. Zwischen den oberen und den unteren Umlenkelementen bewegen sich die Fahrkörbe im Allgemeinen geradlinig in vertikaler Richtung, wobei sich auf einer Seite der Umlenkelement eine Aufwärtsbewegung und auf der jeweils anderen Seite ein Abwärtsbewegung der Fahrkörbe ergibt. Insgesamt ergibt sich so eine umlaufende Bewegung längs einer geschlossenen Bahn.

Im Vergleich zur Verwendung eines herkömmlichen Aufzugs, bei dem ein einziger Fahrkorb auf einer geraden Linie aufwärts bzw. durch Richtungsumkehr abwärts bewegt wird, ergibt sich der Vorteil, dass die Transportbehälter vom Umlaufaufzug prinzipiell in jeder beliebigen Reihenfolge übergeben werden können, unabhängig davon, in welcher Reihenfolge sie dem Umlaufaufzug zugeführt wurden. Hierdurch ist es nunmehr nicht mehr erforderlich, das Regalbediengerät so zu steuern, dass die Transporteinheiten dem Umlaufaufzug in einer bestimmten Reihenfolge zugeführt werden. Vielmehr kann das Regalbediengerät so gesteuert werden, dass das Einlagern der Transportbehälter in das Regal und das Auslagern der Transportbehälter aus dem Regal optimiert wird. Beispielsweise können so zunächst solche Transporteinheiten dem Aufzug zugeführt werden, welche sich in räumlicher Nähe zum Aufzug befinden, um so in räumlicher Nähe zum Aufzug Platz zum Einlagern weiterer Transporteinheiten zu schaffen, und zwar auch dann, wenn durch den Aufzug zunächst Transporteinheiten an den Abgabebereich übergeben werden sollen, welche sich im Regal weiter weg vom Aufzug befinden. Hierdurch können Transportwege zwischen dem Regal und dem Aufzug verringert werden.

Indem die Transportbehälter vom Umlaufaufzug in einer anderen Reihenfolge übergeben werden können als sie ihm zugeführt wurden, sind zudem in vielen Fällen die heute üblichen dem Aufzug nachgeschalteten Sortiereinrichtungen zum Verändern der Reihenfolge der Transporteinheiten entbehrlich, was zu einer erheblichen Reduzierung des Platzbedarfs des Systems führen kann.

Zudem kann der Umlaufaufzug auf Grund seiner vielen Fahrkörbe als Puffer eingesetzt werden, beispielsweise um eine Verzögerung bei einer Entnahme einer Transporteinheit aus dem Abgabebereich des Aufzugs aufzufangen, ohne dabei den Betrieb des Regalbediengerätes zu unterbrechen. Auf diese Weise kann insbesondere die heute übliche Anzahl der Pufferplätze eines Abgabebereichs verringert werden, was zu einer weiteren Reduzierung des Platzbedarfs des Systems führen kann.

Gemäß einer vorteilhaften Weiterbildung der Erfindung ist dem Regal je Regalebene wenigstens ein Einebenenregalbediengerät zum Auslagern von in dem Regal gelagerten Transporteinheiten und zum Zuführen der ausgelagerten Transporteinheiten an den Umlaufaufzug zugeordnet. Unter einem Einebenenbediengerät wird dabei ein Bediengerät verstanden, welches es ermöglicht, ihm zugeführte Transporteinheiten auf einen auswählbaren freien Stellplatz der insgesamt dazu vorgesehenen Stellplätze der jeweiligen Regalebene zu verfrachten und welches es umgekehrt ermöglicht, Transporteinheiten von einem auswählbaren belegten Stellplatz der insgesamt dazu vorgesehenen Stellplätze der jeweiligen Regalebene zu entnehmen und abzugeben, und zwar unabhängig davon, ob die anderen Stellplätze belegt sind oder nicht.

Das Einebenenregalbediengerät kann ein verfahrbares Transportmittel, beispielsweise einen Schlitten oder Wagen, zum Transportieren von Transporteinheiten aufweisen. Hierbei kann das Einebenenregalbediengerät insbesondere automatische Mittel aufweisen, welche es ermöglichen, Transporteinheiten von einem auswählbaren Stellplatz der jeweiligen Regalebene auf das Transportmittel bzw. umgekehrt zu verfrachten.

Indem für jede Regalebene ein Einebenenregalbediengerät vorgesehen ist, kann das Auslagern (Entnehmen) von in der jeweiligen Regalebene des Regals gelagerten Transporteinheiten und das Zuführen der in der jeweiligen Regalebene des Regals ausgelagerten Transporteinheiten unabhängig vom Auslagern und Zuführen von in anderen Regalebenen des Regals gelagerten Transporteinheiten erfolgen, was die Leistungsfähigkeit des Systems beim Abgeben der Transporteinheiten erhöht.

Durch die Kombination des als Umlaufaufzug mit mehreren Fahrkörben für Transporteinheiten ausgebildeten Aufzugs mit jeweils mindestens einem Einebenenregalbediengerät je Regalebene ergeben sich folgende Vorteile: Der Zeitbedarf für das Auslagern kann minimiert werden, da je nach Situation die gewünschte Reihenfolge der auszulagernden Transporteinheiten im Zusammenwirken der Einebenenbediengeräte mit dem Umlaufaufzug hergestellt werden kann. Selbst bei einem hohen Belegungsanteil der Stellplätze des Systems kann eine beliebig gewünschte Reihenfolge der Transporteinheiten beim Auslagern in kurzer Zeit hergestellt werden, da insbesondere Leerfahrten und/oder Hin- und Herfahrten des Umlaufaufzugs verringert werden können, wenn die Transporteinheiten durch die Einebenenbediengeräte vorsortiert an den Umlaufaufzug abgegeben werden.

Nach einer vorteilhaften Weiterbildung der Erfindung ist dem Umlaufaufzug ein Aufnahmebereich zugeordnet, wobei dem Aufzug an dem ihm zugeordneten Aufnahmebereich bereitgestellte Transporteinheiten zuführbar sind, um diese, vorzugsweise mittels der Einebenenregalbediengeräte, in dem Regal einzulagern. Auf diese Weise kann der Umlaufaufzug nicht nur zum Einlagern in das Regal, sondern auch zum Auslagern von Transporteinheiten aus dem Regal verwendet werden. Auf diese Weise kann das System sehr flexibel betrieben werden. Prinzipiell kann so sogar auf weitere, spezielle Aufzüge zum Einlagern der Transporteinheiten verzichtet werden, was das System in konstruktiver Hinsicht vereinfacht und eine kompakte Bauform ermöglicht. Auch dem Aufnahmebereich des (ersten) Umlaufaufzugs können automatische Mittel zum Handhaben der Transporteinheiten zugeordnet sein.

Gemäß einer vorteilhaften Weiterbildung der Erfindung ist einem weiteren Aufzug ein Aufnahmebereich zugeordnet, wobei dem weiteren Aufzug an dem ihm zugeordneten Aufnahmebereich bereitgestellte Transporteinheiten zuführbar sind, um diese, vorzugsweise mittels der Einebenenregalbediengeräte, in dem Regal einzulagern. Ein derartiger weiterer Aufzug ermöglicht es, den einzelnen Regalebenen des Regals Transporteinheiten zum Zwecke ihres Einlagerns zuzuleiten, ohne hierbei Kapazitäten des (ersten) Umlaufaufzugs zu binden. Hierdurch kann die Leistungsfähigkeit des Systems insgesamt erhöht werden, wobei auch dem Aufnahmebereich des weiteren Aufzugs automatische Mittel zum Handhaben der Transporteinheiten zugeordnet sein können.

Nach einer vorteilhaften Weiterbildung der Erfindung ist der weitere Aufzug als Umlaufaufzug mit mehreren Fahrkörben für Transporteinheiten ausgebildet. Hierdurch kann der weitere Umlaufaufzug zum Sortieren der Transportbehälter, also zum Ändern der Reihenfolge der angelieferten Transportbehälter, verwendet werden, bevor diese an eine bestimmte Regalebene des Regals übergeben werden. Hierdurch kann die Positionierung der einzelnen Transportbehälter in den Regalebenen bzw. im gesamten Regal variabler gestaltet werden und beispielsweise dahingehend optimiert werden, dass Transportwege im Bereich der Regalebene beim Einlagern und/oder Auslagern der Transportbehälter minimiert werden.

Gemäß einer vorteilhaften Weiterbildung der Erfindung laufen die Fahrkörbe des Umlaufaufzugs und/oder die Fahrkörbe des weiteren Umlaufaufzugs mit konstanter Geschwindigkeit um. Auf diese Weise ergibt sich eine einfache Steuerung des jeweiligen Umlaufaufzugs.

Nach einer vorteilhaften Weiterbildung der Erfindung laufen die Fahrkörbe des Umlaufaufzugs und/oder die Fahrkörbe des weiteren Umlaufaufzugs mit variabler Geschwindigkeit um, wobei die Geschwindigkeit beim Zuführen der Transporteinheiten und/oder beim Abgeben der Transporteinheiten reduziert ist. Auf diese Weise kann die Durchschnittsgeschwindigkeit des Umlaufaufzugs erhöht werden, da zwischen Zuführ- bzw. Abgebvorgängen die Geschwindigkeit deutlich höher sein kann als während der Zuführ- bzw. Abgebvorgänge. Dies gilt insbesondere, wenn größere Transporteinheiten oder mehrere Transporteinheiten in einen Fahrkorb des Umlaufaufzugs eingeladen bzw. aus diesem ausgeladen werden sollen.

Gemäß einer vorteilhaften Weiterbildung der Erfindung ist der Umlaufaufzug und/oder der weitere Umlaufaufzug so ausgebildet, dass dessen Fahrkörbe wahlweise in einer ersten Richtung oder in einer dazu entgegengesetzten zweiten Richtung umlaufen. Hierdurch ist es möglich, die Gesamtstrecke der Bewegungen der Fahrkörbe, welche zum Handhaben der Transporteinheiten erforderlich sind, insbesondere wenn diese sortiert werden sollen, zu minimieren.

Nach einer vorteilhaften Weiterbildung der Erfindung sind die Fahrkörbe des Umlaufaufzugs und/oder die Fahrkörbe des weiteren Umlaufaufzugs zum gleichzeitigen Transport mehrerer Transporteinheiten ausgebildet. Auf diese Weise kann die Leistungsfähigkeit des Umlaufaufzugs und damit des ganzen Systems erhöht werden.

Gemäß einer vorteilhaften Weiterbildung der Erfindung umfasst das System wenigstens ein Modul, welches zwei Regale und eine dazwischen angeordnete Regalgasse aufweist, wobei vorzugsweise die Einebenenregalbediengeräte zum Einlagern und/oder Auslagern von Transporteinheiten an beiden Regalen des Moduls ausgebildet sind. Durch den modularen Aufbau ist es möglich, das System bedarfsgerecht zu skalieren. Dabei kann das Einebenenregalbediengerät für beide Regale des Moduls benutzt und platzsparend im Wesentlichen in der Regalgasse angeordnet sein.

Nach einer vorteilhaften Weiterbildung der Erfindung weist das Modul wenigstens einen besagten Umlaufaufzug auf, der ortsfest angeordnet ist und dem wenigstens ein besagter Abgabebereich und ein besagter Aufnahmebereich zugeordnet ist. Indem der Umlaufaufzug ortsfest angeordnet ist, ergibt sich ein einfacher Aufbau des Moduls. Zudem entsteht so ein weitgehend autarkes Modul, bei dem das Einlagern und Auslagern der Transportbehälter mit nur einem Aufzug erfolgt, der jedoch ausschließlich für das jeweilige Modul vorgesehen ist. Auf diese Weise ergibt sich eine weitgehend autonome Funktionsweise des einzelnen Moduls.

Gemäß einer vorteilhaften Weiterbildung der Erfindung weist das Modul wenigstens einen besagten Umlaufaufzug auf, der ortsfest angeordnet ist und dem wenigstens ein besagter Abgabebereich zugeordnet ist, wobei das Modul wenigstens einen besagten weiteren Aufzug aufweist, der ortsfest angeordnet ist und dem wenigstens ein besagter Aufnahmebereich zugeordnet ist. Indem der Umlaufaufzug und der weitere Umlaufaufzug ortsfest angeordnet sind, ergibt sich ein einfacher Aufbau des Moduls. Zudem entsteht so ein weitgehend autarkes Modul, bei dem das Einlagern und Auslagern der Transportbehälter lediglich mit Umlaufaufzügen erfolgt, welche ausschließlich für das jeweilige Modul vorgesehen sind. Auf diese Weise ergibt sich eine weitgehend autonome Funktionsweise des einzelnen Moduls. Da zum Auslagern der Transporteinheiten der (erste) Umlaufaufzug und zum Einlagern der Transporteinheiten der weitere Aufzug verwendet wird, ist die Leistungsfähigkeit des Moduls erhöht.

Nach einer vorteilhaften Weiterbildung der Erfindung weist das System wenigstens einen besagten Umlaufaufzug oder wenigstens einen besagten weiteren Aufzug auf, welcher zwischen mehreren Modulen derart verfahrbar ist, dass Transporteinheiten von ihm an mehrere Module abgebbar sind und/oder dass Transporteinheiten von mehreren Modulen durch ihn aufnehmbar sind. Auf diese Weise ist es möglich, die Anzahl der für das System benötigten Aufzüge insgesamt zu verringern, was das System vereinfachen kann. Wenn der (erste) Umlaufaufzug verfahrbar ist, so ist es möglich, die ehemals in verschiedenen Modulen gelagerten Transporteinheiten an ein und den selben Abgabebereich zu übergeben, was die Zusammenstellung von Transportgruppen aus Transporteinheiten in einer bestimmten Reihenfolge erleichtern kann. Wenn der weitere Umlaufaufzug verfahrbar ist, so ist es möglich, die ehemals in verschiedenen Modulen gelagerten Transporteinheiten an ein und den selben Abgabebereich zu übergeben, was die Zusammenstellung von Transportgruppen aus Transporteinheiten in einer bestimmten Reihenfolge erleichtern kann.

Gemäß einer vorteilhaften Weiterbildung der Erfindung weist das System wenigstens eine Sammelstrecke zum Sammeln der an besagten Abgabebereichen mehrerer Module abgegebenen Transporteinheiten auf. Hierdurch ist es möglich, Transportgruppen aus Transporteinheiten zusammenzustellen, welche in unterschiedlichen Modulen eingelagert waren. Die Sammelstrecke kann dabei automatisch gesteuert und beispielsweise als Förderband oder als (Stau-)Rollenförderer ausgebildet sein.

Nach einer vorteilhaften Weiterbildung der Erfindung weist wenigstens einer der Abgabebereiche höchstens drei, bevorzugt höchstens zwei, besonders bevorzugt höchstens einen Pufferplatz für Transporteinheiten auf. Ein Pufferplatz ist ein Abstellplatz zum vorübergehenden Abstellen einer der Transporteinheiten. Pufferplätze sind in vielen Fällen erforderlich, um den Zeitraum zu überbrücken, der vergeht, bis es möglich ist, die jeweilige Transporteinheit aus dem Abgabebereich, beispielsweise mittels der Sammelstrecke, abzuführen. Bei dem erfindungsgemäßen System kann die Anzahl der Pufferplätze in vielen Fällen derart gering gehalten werden, da die erforderliche Pufferfunktion zumindest teilweise durch den Umlaufaufzug bereitgestellt werden kann. Auf diese Weise kann der Platzbedarf des Systems verringert werden.

Weiterhin betrifft die Erfindung ein Verfahren zum Lagern und Abgeben von Transporteinheiten in einer vorgesehenen Reihenfolge, bei dem Transporteinheiten in mehreren Regalebenen wenigstens eines Regals gelagert werden, bei dem die in dem Regal gelagerten Transporteinheiten einem Aufzug zugeführt werden, und bei dem die dem Aufzug zugeführten Transporteinheiten an wenigstens einen Abgabebereich abgegeben werden, wobei als Aufzug ein Umlaufaufzug mit mehreren Fahrkörben für Transporteinheiten verwendet wird.

Vorteile, Aus- und Weiterbildungen des erfindungsgemäßen Verfahrens sind bei der Beschreibung des beanspruchten Systems erläutert.

Die vorstehend erläuterten und/oder in den Unteransprüchen wiedergegebenen vorteilhaften Aus- und Weiterbildungen der Erfindung können dabei - außer z. B. in den Fällen eindeutiger Abhängigkeiten oder unvereinbarer Alternativen - einzeln oder aber auch in beliebiger Kombination miteinander zur Anwendung kommen.

Die Erfindung und ihre vorteilhaften Aus- und Weiterbildungen sowie deren Vorteile werden nachfolgend anhand von Figuren näher erläutert. Dargestellt sind lediglich diejenigen Bestandteile eines Systems zum Lagern und Abgeben von Transporteinheiten in einer vorgesehenen Reihenfolge, welche für das Verständnis der Erfindung erforderlich sind. Dabei sind einander entsprechende Elemente in den verschiedenen Figuren mit den selben Bezugszeichen versehen. Es zeigt in einer schematischen Prinzipskizze:
- **Figur 1**: eine schematisierte Aufsicht auf ein erstes Ausführungsbeispiel eines erfindungsgemäßen Systems zum Lagern und zum Abgeben von Transporteinheiten in einer vorgesehenen Reihenfolge,
- **Figur 2**: eine schematisierte Schnittansicht durch eine Regalgasse des ersten Ausführungsbeispiels,
- **Figur 3**: eine schematisierte Seitenansicht des ersten Ausführungsbeispiel und
- **Figur 4**: eine schematisierte Aufsicht auf ein zweites Ausführungsbeispiel eines erfindungsgemäßen Systems zum Lagern und zum Abgeben von Transporteinheiten in einer vorgesehenen Reihenfolge.

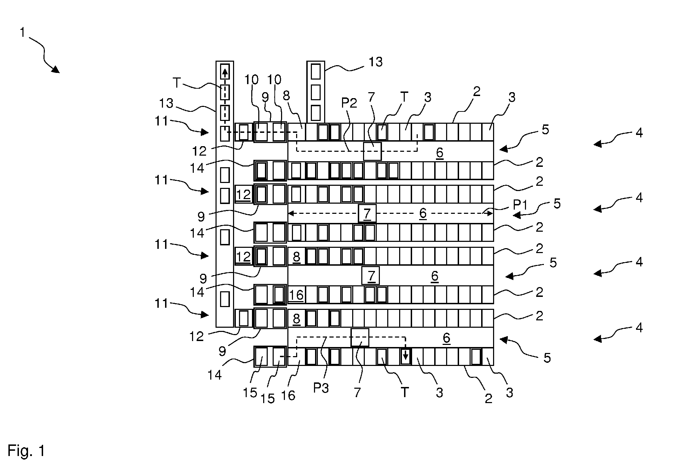

Figur 1 zeigt eine schematisierte Aufsicht auf ein erstes Ausführungsbeispiel eines erfindungsgemäßen Systems 1 zum Lagern und zum Abgeben von Transporteinheiten T in einer vorgesehenen Reihenfolge. Das System 1 umfasst eine Mehrzahl von Regalen 2, welche jeweils mehrere übereinanderliegende Regalebenen 17 aufweisen, welche ihrerseits jeweils in einer Linie angeordnete Stellplätze 3 für Transporteinheiten T aufweisen. Unter Transporteinheiten T werden dabei Transportstücke aller Art, insbesondere Waren, Behälter, Pakete, Paletten oder Tabletts, verstanden. In Figur 1 sind dabei aus Gründen der Übersichtlichkeit lediglich einige der Stellplätze 3 mit Bezugszeichen versehen. Dabei sind lediglich einige der Stellplätze 3 mit Transporteinheiten T belegt. Es versteht sich von selbst, dass in der Realität der Anteil der belegten Stellplätze 3 höher oder niedriger sein kann.

Im ersten Ausführungsbeispiel sind jeweils zwei Regale 2 zu einem Modul 4 zusammengefasst, wobei zwischen den Regalen 2 des jeweiligen Moduls eine Regalgasse 5 gebildet ist. Jedes Modul weist in jeder Regalebene 17 der Regale 2 ein Einebenenregalbediengerät 6 auf, welches im Wesentlichen in der Regalgasse 5 angeordnet und zum Bedienen beider Regale 2 des jeweiligen Moduls 4 ausgebildet ist. Das Einebenenregalbediengerät 6 weist ein verfahrbares Transportmittel 7, beispielsweise einen Schlitten oder Wagen, zum Transportieren von Transporteinheiten T auf. Der Pfeil P1 veranschaulicht dabei den Fahrbereich des Transportmittels 7. Hierbei weist das Einebenenregalbediengerät 6 nicht näher gezeigte insbesondere automatische Mittel auf, welche es ermöglichen, Transporteinheiten T von einem der Stellplätze 3 der jeweiligen Regalebene 17 der Regale 2 des jeweiligen Moduls 4 auf das Transportmittel 7 bzw. umgekehrt zu verfrachten.

Je Regalebene 17 eines der Module 4 ist ein Pufferplatz 8 vorgesehen, der benachbart zu einem (ersten) Umlaufaufzug 9 angeordnet ist, welcher zum Auslagern von Transporteinheiten vorgesehen ist. Dabei umfasst das Einebenenregalbediengerät 6 nicht näher gezeigte insbesondere automatische Mittel, welche es ermöglichen, Transporteinheiten T von dem Transportmittel 7 auf den Pufferplatz 8 der jeweiligen Regalebene 17 der Regale 2 des jeweiligen Moduls 4 zu verfrachten. Wäre der (erste) Umlaufaufzug 9 auch zum Einlagern von Transporteinheiten vorgesehen, so könnten letztere Mittel auch zum Verfrachten von Transporteinheiten T in umgekehrter Richtung vorgesehen sein.

Der Umlaufaufzug 9 weist eine Vielzahl von Fahrkörben 10 auf, von denen jeder im ersten Ausführungsbeispiel eine Transporteinheit T aufnehmen kann. Mit Hilfe der umlaufenden Fahrkörbe 10 ist es möglich, Transporteinheiten T zu wenigstens einem dem Umlaufaufzug 9 zugeordneten Abgabebereich 11 zu transportieren. Im ersten Ausführungsbeispiel sind je Umlaufaufzug 9 zwei Abgabebereiche 11 vorgesehen, von denen in der Aufsicht der Figur 1 allerdings lediglich einer sichtbar ist. Dabei weist jeder der Abgabebereiche 11 genau einen Pufferplatz 12 auf. Hierbei sind nicht gezeigte insbesondere automatische Mittel zum Verbringen von Transporteinheiten T aus einem der Fahrkörbe 10 auf den Pufferplatz 12 und zum Verbringen von Transporteinheiten T vom Pufferplatz 12 auf eine Sammelstrecke 13 vorgesehen, welche beispielsweise als Förderband oder als Rollenförderer ausgebildet sein können und welche entlang eines der Pufferplätze 12 der Module 4 verlaufen.

Der Pfeil P2 veranschaulicht einen beispielhaften Transportweg beim Auslagern einer Transporteinheit T aus einem der Regale 2. Zunächst wird das Transportmittel 7 in den Bereich des jeweiligen Stellplatzes 3 verfahren, aus dem die gewünschte Transporteinheit T mittels der dazu vorgesehenen Mittel entnommen und auf das Transportmittel 7 aufgeladen wird. Nun wird das Transportmittel 7 in den Bereich des Pufferplatzes 8 verfahren, wo die Transporteinheit T mittels der dazu vorgesehenen Mittel auf den Pufferplatz 8 verbracht wird. Vom Pufferplatz 8 kann es sofort oder später mittels der entsprechenden Mittel in einen Fahrkorb 10 des Umlaufaufzugs 9 eingeladen werden.

Dabei können gleichzeitig mehrere Fahrkörbe 10 gleichzeitig mit jeweils einer Transporteinheit T beladen sein, wobei die im Umlaufaufzug 9 befindlichen Transporteinheiten T von der selben Regalebene 17 und/oder von unterschiedlichen Regalebenen 17 stammen können. Die im Umlaufaufzug 9 befindlichen Transporteinheiten T können nun in beliebiger Reihenfolge mittels der dazu vorgesehenen Mittel wahlweise an den Pufferplatz 12 eines der Abgabebereiche 11 übergeben werden. Dabei ist es auch möglich, einzelne Transporteinheiten T so lange in einem der Fahrkörbe 10 zu belassen, bis andere Fahrkörbe 10 mehrfach be- und entladen wurden. Auf diese Weise ist eine effektive Sortierung der Transportbehälter T und eine Pufferung des Systems 1 möglich.

Vom Pufferplatz 12 können die Transporteinheiten T dann mittels der entsprechenden Mittel an die jeweilige Sammelstrecke 13 abgegeben werden, wobei die Reihenfolge der aus unterschiedlichen Modulen 4 stammenden Transporteinheiten T durch Wahl des Zeitpunktes der Abgabe an die Sammelstrecke 13 variierbar ist. Insgesamt ist es so möglich, die in den Regalen 2 des Systems 1 wahlweise mittels einer der Sammelstrecken 13 in einer gewünschten Reihenfolge abzugeben.

Jedes Modul 4 weist einen weiteren Aufzug 14 auf, der dem Einlagern von Transporteinheiten T in dessen beide Regale 2 dient. Der weitere Aufzug 14 ist ebenfalls als Umlaufaufzug 14 mit einer Vielzahl von Fahrkörben 15 ausgebildet. In jeder Regalebene 17 befindet sich ein dem weiteren Aufzug 14 zugeordneter Pufferplatz 16. Das Einlagern von Transporteinheiten T in die Regale 2 erfolgt nun derart, dass einem in Figur 1 nicht sichtbaren Aufnahmebereich, der mehrere Pufferplätze aufweist, Transporteinheiten von außerhalb des Systems 1 zugeführt werden. Von den Pufferplätzen werden die Transporteinheiten T dann mittel vorzugsweise automatischer Mittel in Fahrkörbe 15 des Umlaufaufzugs 14 eingeladen und zu einer der Regalebenen 17 des Moduls transportiert, wobei analog zum Auslagern eine Sortierung stattfinden kann, da die Reihenfolge des Ausladens nicht der Reihenfolge des Einladens entsprechen muss. Beim Ausladen werden der jeweilige Transportbehälter T auf den jeweiligen Pufferplatz 16 der Regalebene 17 mittels automatischer Mittel übergeben. Von dort wird er mittels weiterer vorzugsweise automatischer Mittel auf das Transportmittel 7 aufgeladen, mit diesem zum vorgesehenen Stellplatz 3 verfahren und dort mittels vorzugsweise automatischer Mittel auf den Stellplatz 3 verbracht. Der Transportweg beim Einlagern einer Transporteinheit ist durch den Pfeil P3 veranschaulicht.

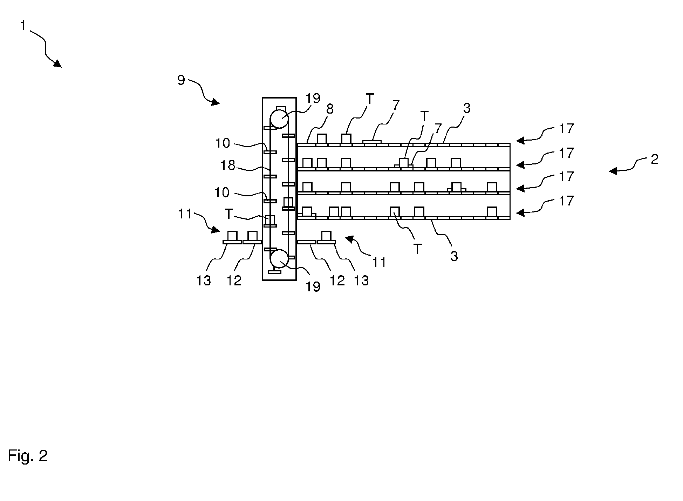

Figur 2 zeigt eine schematisierte Schnittansicht durch eine Regalgasse 5 des ersten Ausführungsbeispiels des Systems 1. Dabei sind die übereinanderliegenden Regalebenen 17 deutlich erkennbar. Ebenso ist der grundsätzliche Aufbau des (ersten) Umlaufaufzugs 9 dargestellt. Bei dem Umlaufaufzug 9, auch Paternosteraufzug genannt, verkehren mehrere an wenigstens einem endlosen Umlaufelement 18 hängend befestigte Fahrkörbe 10 in einer umlaufenden Bewegung. Bei den endlosen Umlaufelementen 18 kann es sich insbesondere um Ketten, Bänder und/oder Seile handeln. Die Umlaufelemente 18 werden üblicherweise über korrespondierende obere und untere Umlenkelemente 19 geführt, umgelenkt und angetrieben. Die Umlenkelemente 19 können insbesondere Kettenräder, Scheiben und/oder Rollen umfassen. Im Bereich der Umlenkelemente 19 werden die Fahrkörbe 10 in der Regel längs einer oder mehreren Kurven so geführt, dass eine Aufwärtsbewegung in eine Abwärtsbewegung bzw. dass eine Abwärtsbewegung in eine Aufwärtsbewegung übergeht. Auf Grund der hängenden Befestigung der Fahrkörbe 10 verändert sich die Ausrichtung der Fahrkörbe 10 im Raum auch dann nicht, wenn sie den Bereich der Umlenkelemente 19 passieren. So ist es möglich, auch mit Transporteinheiten T beladene Fahrkörbe 10 über den Bereich der Umlenkelemente 19 hinweg umlaufen zu lassen. Zwischen den oberen und den unteren Umlenkelementen 19 bewegen sich die Fahrkörbe 10 im Allgemeinen geradlinig in vertikaler Richtung, wobei sich auf einer Seite der Umlenkelemente 19 eine Aufwärtsbewegung und auf der jeweils anderen Seite eine Abwärtsbewegung der Fahrkörbe 10 ergibt. Insgesamt ergibt sich so eine umlaufende Bewegung längs einer geschlossenen Bahn.

Weiterhin sind in Figur 2 beide bereits erwähnten Abgabebereiche 11 mit ihren Pufferplätzen 12 und den zugeordneten Sammelstrecken 13 sichtbar.

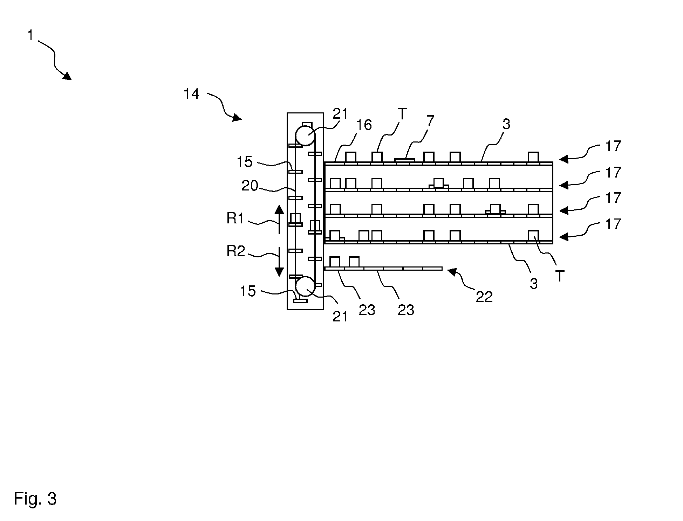

Figur 3 zeigt eine schematisierte Seitenansicht des ersten Ausführungsbeispiels des Systems 1. Dabei ist insbesondere der weitere Umlaufaufzug 14 näher dargestellt. Er weist wenigstens ein endloses Umlaufelement 20 auf, an dem die Fahrkörbe 15 hängend befestigt sind. Das Umlaufelement 20 ist dabei durch Umlenkelemente 21 geführt, umgelenkt und angetrieben. Hinsichtlich der Funktionsweise und der möglichen Ausgestaltungen entspricht der weitere Umlaufaufzug 14 dem zuvor näher besprochenen Umlaufaufzug 9. Dabei ist der weitere Umlaufaufzug 14 ebenso wie der (erste) Umlaufaufzug 9 so ausgebildet, dass dessen Fahrkörbe 15, 10 wahlweise in einer ersten Richtung R1 oder in einer dazu entgegengesetzten zweiten Richtung R2 umlaufen.

Weiterhin ist in Figur 3 der bereits erwähnte Aufnahmebereich 22 mit seinen Pufferplätzen 23 sichtbar.

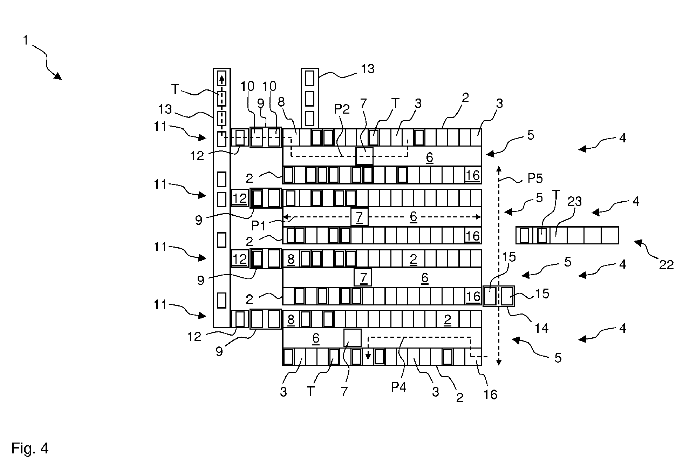

Figur 4 zeigt eine schematisierte Aufsicht auf ein zweites Ausführungsbeispiel eines erfindungsgemäßen Systems 1 zum Lagern und zum Abgeben von Transporteinheiten T in einer vorgesehenen Reihenfolge. Der Wesentliche Unterschied zum ersten Ausführungsbeispiel besteht darin, dass für mehrere Module 4 lediglich ein weiterer Umlaufaufzug 14 vorgesehen ist, der derart verfahrbar ist, dass Transporteinheiten T von ihm an die entsprechenden Module 4 abgebbar sind. Auf diese Weise können die Regale 2 der anfahrbaren Module 4 von nur einem Aufnahmebereich 22 mit Transporteinheiten T beschickt werden. Der Pfeil P5 illustriert dabei den Verfahrbereich des weiteren Umlaufaufzugs 14.

### Bezugszeichenliste

- 1: System
- 2: Regal
- 3: Stellplatz
- 4: Modul
- 5: Regalgasse
- 6: Einebenenregalbediengerät
- 7: Transportmittel
- 8: Pufferplatz
- 9: Umlaufaufzug
- 10: Fahrkorb
- 11: Abgabebereich
- 12: Pufferplatz
- 13: Sammelstrecke
- 14: weiterer Aufzug
- 15: Fahrkorb
- 16: Pufferplatz
- 17: Regalebene
- 18: endloses Umlaufelement
- 19: Umlenkelement
- 20: endloses Umlaufelement
- 21: Umlenkelement
- 22: Aufnahmebereich
- 23: Pufferplatz

- T: Transporteinheit
- P1: Fahrbereich des Transportmittels
- P2: Transportweg beim Auslagern einer Transporteinheit
- P3: Transportweg beim Einlagern einer Transporteinheit
- P4: Transportweg beim Einlagern einer Transporteinheit
- P5: Verfahrbereich des weiteren Aufzugs
- R1: erste Richtung
- R2: zweite Richtung

## Patentansprüche

1. System zum Lagern und zum Abgeben von Transporteinheiten (T) in einer vorgesehenen Reihenfolge, bei dem Transporteinheiten (T) in mehreren Regalebenen (17) wenigstens eines Regals (2) lagerbar sind, bei dem die in dem Regal (2) gelagerten Transporteinheiten (T) einem Aufzug (9) zuführbar sind, und bei dem die dem Aufzug (9) zugeführten Transporteinheiten (T) an wenigstens einen Abgabebereich (11) übergebbar sind, **dadurch gekennzeichnet, dass** der Aufzug (9) als Umlaufaufzug (9) mit mehreren Fahrkörben (10) für Transporteinheiten (T) ausgebildet ist.

2. System nach vorstehendem Anspruch, **dadurch gekennzeichnet, dass** dem Regal (2) je Regalebene (17) wenigstens ein Einebenenregalbediengerät (6) zum Auslagern von in dem Regal (2) gelagerten Transporteinheiten (T) und zum Zuführen der ausgelagerten Transporteinheiten (T) an den Umlaufaufzug (9) zugeordnet ist.

3. System nach einem der vorstehenden Ansprüche, **dadurch gekennzeichnet, dass** dem Umlaufaufzug (9) ein Aufnahmebereich (22) zugeordnet ist, wobei dem Umlaufaufzug (9) an dem ihm zugeordneten Aufnahmebereich (22) bereitgestellte Transporteinheiten (T) zuführbar sind, um diese, vorzugsweise mittels der Einebenenregalbediengeräte (6), in dem Regal (2) einzulagern.

4. System nach einem der vorstehenden Ansprüche, **dadurch gekennzeichnet, dass** einem weiteren Aufzug (14) ein Aufnahmebereich (22) zugeordnet ist, wobei dem weiteren Aufzug (14) an dem ihm zugeordneten Aufnahmebereich (22) bereitgestellte Transporteinheiten (T) zuführbar sind, um diese, vorzugsweise mittels der Einebenenregalbediengeräte (6), in dem Regal (2) einzulagern.

5. System nach einem der vorstehenden Ansprüche, **dadurch gekennzeichnet, dass** der weitere Aufzug (14) als Umlaufaufzug (14) mit mehreren Fahrkörben (15) für Transporteinheiten (T) ausgebildet ist.

6. System nach einem der vorstehenden Ansprüche, **dadurch gekennzeichnet, dass** die Fahrkörbe (10) des Umlaufaufzugs (9) und/oder die Fahrkörbe (15) des weiteren Umlaufaufzugs (14) mit konstanter Geschwindigkeit umlaufen.

7. System nach einem der vorstehenden Ansprüche, **dadurch gekennzeichnet, dass** die Fahrkörbe (10) des Umlaufaufzugs (9) und/oder die Fahrkörbe (15) des weiteren Umlaufaufzugs (14) mit variabler Geschwindigkeit umlaufen, wobei die Geschwindigkeit beim Zuführen der Transporteinheiten (T) und/oder beim Übergeben der Transporteinheiten (T) reduziert ist.

8. System nach einem der vorstehenden Ansprüche, **dadurch gekennzeichnet, dass** der Umlaufaufzug (9) und/oder der weitere Umlaufaufzug (14) so ausgebildet ist, dass dessen Fahrkörbe (10,15) wahlweise in einer ersten Richtung (R1) oder in einer dazu entgegengesetzten zweiten Richtung (R2) umlaufen.

9. System nach einem der vorstehenden Ansprüche, **dadurch gekennzeichnet, dass** die Fahrkörbe (10) des Umlaufaufzugs (9) und/oder die Fahrkörbe (15) des weiteren Umlaufaufzugs (14) zum gleichzeitigen Transport mehrerer Transporteinheiten (T) ausgebildet sind.

10. System nach einem der vorstehenden Ansprüche, **dadurch gekennzeichnet, dass** das System (1) wenigstens ein Modul (4) umfasst, welches zwei Regale (2) und eine dazwischen angeordnete Regalgasse (5) aufweist, wobei vorzugsweise die Einebenenregalbediengeräte (6) zum Einlagern und/oder Auslagern von Transporteinheiten (T) an beiden Regalen (2) des Moduls (4) ausgebildet sind.

11. System nach vorstehendem Anspruch, **dadurch gekennzeichnet, dass** das Modul (4) wenigstens einen besagten Umlaufaufzug (9) aufweist, der ortsfest angeordnet ist und dem wenigstens ein besagter Abgabebereich (11) und ein besagter Aufnahmebereich (22) zugeordnet ist.

12. System nach Anspruch 10, **dadurch gekennzeichnet, dass** das Modul (4) wenigstens einen besagten Umlaufaufzug (9) aufweist, der ortsfest angeordnet ist und dem wenigstens ein besagter Abgabebereich (11) zugeordnet ist, und dass das Modul (4) wenigstens einen besagten weiteren Aufzug (14) aufweist, der ortsfest angeordnet ist und dem wenigstens ein besagter Aufnahmebereich (22) zugeordnet ist.

13. System nach einem der Ansprüche 10 bis 12, **dadurch gekennzeichnet, dass** das System (1) wenigstens einen besagten Umlaufaufzug (9) oder wenigstens einen besagten weiteren Aufzug (14) aufweist, welcher zwischen mehreren Modulen (4) derart verfahrbar ist, dass Transporteinheiten (T) von ihm an mehrere Module (4) abgebbar sind und/oder dass Transporteinheiten (T) von mehreren Modulen (4) durch ihn aufnehmbar sind.

14. System nach vorstehenden Ansprüchen, **dadurch gekennzeichnet, dass** das System (1) wenigstens eine Sammelstrecke (13) zum Sammeln der an besagten Abgabebereichen (11) mehrerer Module (4) abgegebenen Transporteinheiten (T) aufweist.

15. System nach vorstehenden Ansprüchen, **dadurch gekennzeichnet, dass** wenigstens einer der Abgabebereiche (11) höchstens drei, bevorzugt höchstens zwei, besonders bevorzugt höchstens einen Pufferplatz für Transporteinheiten (T) aufweist.

16. Verfahren zum Lagern und Abgeben von Transporteinheiten (T) in einer vorgesehenen Reihenfolge, bei dem Transporteinheiten (T) in mehreren Regalebenen (17) wenigstens eines Regals (2) gelagert werden, bei dem die in dem Regal (2) gelagerten Transporteinheiten (T) einem Aufzug (9) zugeführt werden, und bei dem die dem Aufzug (9) zugeführten Transporteinheiten (T) an wenigstens einen Abgabebereich (11) übergegeben werden, **dadurch gekennzeichnet, dass** als Aufzug (9) ein Umlaufaufzug (9) mit mehreren Fahrkörben (10) für Transporteinheiten (T) verwendet wird.
